Europäisches Patentamt

European Patent Office

Office européen des brevets

(19)

(11) Numéro de publication: **0 013 445**
**A1**

## (12) DEMANDE DE BREVET EUROPEEN

(21) Numéro de dépôt: 79200746.0

(22) Date de dépôt: 10.12.79

(51) Int. Cl.³: **C 02 F 9/00**
**B 01 D 21/00**

(30) Priorité: 11.12.78 BE 46692

(43) Date de publication de la demande:
23.07.80 Bulletin 80/15

(84) Etats Contractants Désignés:
AT CH DE FR GB IT LU NL SE

(71) Demandeur: Godar, Serge
330 avenue des Croix de Guerre
B-1120 Bruxelles(BE)

(72) Inventeur: Godar, Serge
330 avenue des Croix de Guerre
B-1120 Bruxelles(BE)

(74) Mandataire: Dellicour, Paul
Office de Brevets E. Dellicour rue Fabry 18/012
B-4000 Liege(BE)

(54) Installation manuelle de prélèvement et de traitement d'eaux naturelles.

(57) L'installation comporte une cuve (11) de traitement en matière souple, dans laquelle plonge un agitateur, ladite cuve étant munie à sa base d'une vanne (14) d'évacuation du précipité et vers la mi-hauteur à partir du bas d'une vanne (15) d'évacuation du surnageant traité, cette dernière étant reliée à des réservoirs (21) de stockage par l'intermédiaire d'une pompe manuelle (17) et de filtres (18 et 19).

La cuve de traitement est suspendue de manière amovible dans une ossature, dont les éléments sont aisément assemblables et démontables et qui supporte les éléments créant l'agitation et leur mécanisme d'entrainement ainsi que les divers appareillages.

FIG.1

EP 0 013 445 A1

## Installation manuelle de prélèvement et de traitement d'eaux naturelles

La présente invention a pour objet une installation manuelle de prélèvement et de traitement d'eaux naturelles en vue de les rendre potables.

Il est bien connu que dans certaines circonstances, telles que cataclysmes naturels (séismes, inondations, etc.) ou déplacement ou isolement de groupes humains dans des milieux naturellement hostiles et/ou difficilement accessibles, l'alimentation en eau potable constitue un problème fondamental de survie.

Si ce problème peut être résolu individuellement et occasionnellement au moyen de méthodes éprouvées, par exemple au moyen de comprimés désinfectants, il n'en est plus de même lorsqu'il faut pallier le besoin en eau potable à plus long terme, pour des groupes de quelques dizaines à quelques centaines d'individus, spécialement si ceux-ci ne disposent pas d'énergie électrique ou mécanique (moteurs) pour faire fonctionner des installations classiques fixes ou mobiles nécessitant de telles énergies.

L'invention a donc pour but de créer une installation légère, démontable et facilement transportable, de prélèvement et de traitement d'eaux naturelles dans le but de les rendre potables, et cela, sans autre source d'énergie que l'énergie manuelle.

Une installation réalisée suivant l'invention est caractérisée en ce qu'elle comporte une cuve de traitement en matière souple, dans laquelle plonge un agitateur, ladite cuve étant munie à sa base d'une vanne d'évacuation du précipité et vers la mi-hauteur à partir du bas d'une vanne d'évacuation du surnageant traité, cette dernière étant reliée à un ou plusieurs réservoirs de stockage par l'intermédiaire d'une pompe manuelle et de filtres.

Suivant l'invention, la cuve de traitement est suspendue de manière amovible dans une ossature, dont les éléments sont aisément assemblables et démontables et qui supporte les éléments créant l'agitation et leur mécanisme d'entraînement ainsi que les divers appareillages.

Encore suivant l'invention, sur et au sommet de l'ossature est prévu un plateau horizontal surplombant la cuve de traitement, servant de support au mécanisme d'entraînement de l'agitateur, dont l'axe traverse le plateau, et pourvu d'un orifice pour l'alimentation en eau à traiter et en réactifs dans ladite cuve.

Dans une réalisation avantageuse de l'invention, les éléments créant l'agitation, c'est-à-dire les éléments constitutifs de l'agitateur, sont disposés à l'intérieur d'une cage de manière telle que ces éléments ne puissent endommager la cuve de traitement en matière souple. D'autre part, un panier grillagé, un sac poreux ou à trame large, ou analogue est associé à l'axe de l'agitateur et renferme les réactifs à dissoudre ou à disperser dans l'eau à traiter.

- 3 -

L'invention est décrite maintenant avec plus de détails sur la base du dessin schématique annexé, à titre d'exemple, montrant en :

Figure 1 une vue en élévation de l'installation de prélèvement et de traitement conforme à l'invention ;

Figure 2 une vue en élévation de l'installation, suivant la face opposée à celle représentée en figure 1, et

Figure 3 une vue en plan par dessus de l'installation.

Comme on le voit au dessin, l'installation comporte une ossature centrale formée de deux ou plusieurs échelles verticales 1, triangulées ou non, reliées entre elles par des longerons 2 et associées à des barres antibasculement 3. Des supports en porte-à-faux 4 sont placés de part et d'autre de manière amovible à la partie supérieure de l'ossature, parallèlement aux barres 3, dans le prolongement des longerons 2.

Tous ces éléments sont facilement assemblés et démontés grâce à une fixation, par exemple par goupilles, de manière à former un ensemble compact et léger pour le transport.

L'ossature supporte en sa partie médiane supérieure un plateau horizontal 5, logé entre les longerons supérieurs 2 et reposant sur une cornière support (non visible), soudée ou rivetée à chacun desdits longerons. Ce plateau est avantageusement réalisé en plusieurs parties, par exemple cinq, et la partie centrale 6 est maintenue fermement en place grâce à un élément additionnel 7, ici une plaque, monté sur le longeron correspondant pour former avec la cornière support une

glissière. Cette glissière peut être formée par la cornière elle-même qui, à cet endroit, aurait une section en U et non en L comme sur le reste de sa longueur. On comprend aisément que pour monter le plateau 5 sur l'ossature, on pose d'abord l'élément de plateau 6 sur les cornières, puis on le fait glisser sous les plaques 7 pour l'amener dans la position centrale. On pose ensuite sur les cornières les quatre autres éléments de plateau.

L'élément central de plateau 6 comporte sur sa face externe des supports 8 pour un mécanisme d'entraînement 9, avec système de démultiplication et renvoi d'angle, d'un agitateur à pales, hélices ou analogue. La commande de l'agitateur est faite manuellement par un volant à poignée 10 et cet agitateur monté par un système de fixation approprié, tel que à baïonnette, à goupilles, à axe coupé longitudinalement avec tube coulissant, à serrage par boulons ou vis, etc. sur un axe vertical qui a traversé le plateau, plonge, sous ledit plateau, dans une cuve de traitement 11, constituée par un sac souple.

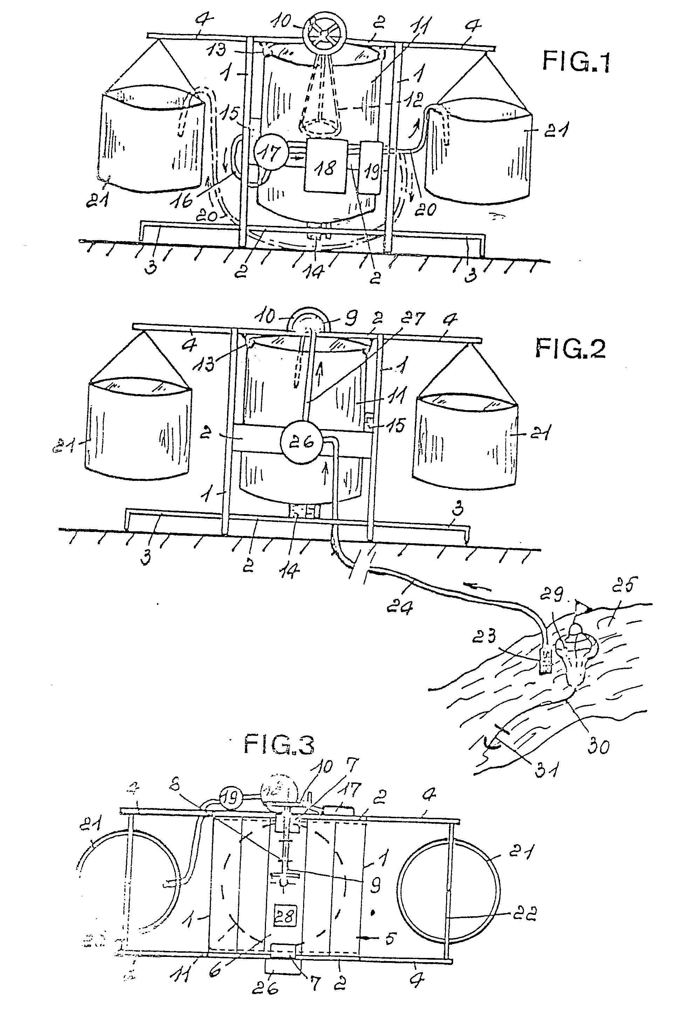

Les éléments créant l'agitation, c'est-à-dire les éléments constitutifs de l'agitateur (pales, hélices, etc.) sont disposés à l'intérieur d'un ensemble de tiges, au minimum deux, dont une extrémité est fixée à l'axe de l'agitateur dans sa partie supérieure et dont l'autre extrémité est fixée sur une couronne perpendiculaire à l'axe et centrée sur ce dernier, de telle sorte que les éléments créant l'agitation ne peuvent endommager le sac souple 11, dans lequel est prévu le traitement. On n'a représenté au dessin (figure 1) que l'élément de protection 12 entourant l'agitateur.

Un panier grillagé, un sac poreux ou à trame large, ou analogue (non représenté) contenant des réactifs à dissoudre ou à disperser dans l'eau à traiter, est disposé autour de l'axe de l'agitateur, à sa partie supérieure ou excentriquement par rapport à ce dernier.

La cuve de traitement 11, en matière souple résistant aux réactifs utilisés et imperméable aux polluants agressifs, est suspendue à des crochets mobiles 13 fixés sur un cercle sous le plateau 5 au moyen d'une armature circulaire repliable placée dans un ourlet gainant celle-ci. Des encoches sont réalisées dans cet ourlet de telle sorte que les crochets 13 sont en contact avec l'armature circulaire.

La contenance de la cuve de traitement 11 est d'environ deux cent cinquante litres, sans que cette indication de volume puisse constituer une limitation de la portée du brevet dans un sens ou dans l'autre.

A la base de la cuve de traitement 11, dans sa partie centrale, est disposée une vanne 14 destinée à permettre après décantation l'évacuation des précipités formés au cours du traitement. Cette vanne 14 est prolongée au moyen d'un raccord rapide par un tuyau d'évacuation (non représenté). D'autre part, sur la paroi de la cuve, entre le fond et la moitié de la hauteur de celle-ci, est fixée une vanne 15, dont la fonction essentielle est d'évacuer le surnageant traité, débarrassé du précipité.

La vanne 15 est prolongée par un raccord rapide muni d'un tuyau souple 16 alimentant une pompe manuelle 17, de préférence à mouvement rotatif plutôt qu'alternatif qui est reliée à un filtre à sac démontable 18, dont le tissu filtrant a une porosité d'environ cinq microns. Ce filtre primaire 18 est suivi d'une cartouche filtrante et/ou stérilisante 19, dont la porosité du corps filtrant est inférieure à un micron. Des tuyaux souples relient la cartouche 19 à des réservoirs ou vaches à eau 21 d'une contenance d'environ cent litres, qui servent de stockage avant utilisation.

Les vaches à eau 21 sont suspendues par des traverses 22 aux supports en porte-à-faux 4, et la cuve de traitement 11 se trouve donc en fait insérée entre les deux réservoirs de stockage 21.

On peut concevoir également, sans sortir du domaine de l'invention, afin d'augmenter le nombre de vaches à eau de stockage, l'addition d'échelles et de longerons ou lisses supplémentaires munis à la partie supérieure de barres transversales de suspension destinées à accrocher les autres vaches à eau.

Afin d'assurer la stabilité de l'ensemble et d'éviter le basculement de l'ossature au cas, par exemple, où l'une des vaches à eau serait remplie et où la cuve de traitement et l'autre vache à eau seraient vides, il est prévu suivant l'invention de disposer à la base et au milieu des deux échelles de l'ossature deux arceaux ou collier dans lesquels viennent s'emboîter des poutrelles, une extrémité s'appuie sur le sol sous une vache à eau et l'autre sous l'arceau ou le collier de l'échelle disposée vers l'autre vache à eau. Ces poutrelles sont fixées entre elles et aux arceaux au moyen de goupilles amovibles et sont représentées au dessin par les barres anti-basculement 3.

L'alimentation en eau à traiter de la cuve de traitement 11 est réalisée au moyen d'une crépine 23, munie ou non d'un clapet de pied et reliée à un tuyau souple 2

amenant l'eau de l'endroit de prise 25, tel qu'une rivière, à une pompe manuelle 26, de préférence à mouvement rotatif plutôt qu'alternatif, cette pompe 26 pouvant avantageusement être montée sur un longeron 2 de l'ossature.

L'eau sortant de la pompe 26 est amenée au moyen d'un tuyau souple 27 à la cuve de traitement 11 à travers une ouverture 28 prévue dans l'élément central de plateau 6.

La crépine 23 est lestée, de telle sorte qu'elle est immergée sous la surface de l'eau à une profondeur de quelques dizaines de centimètres. La crépine 23 et son lest sont accrochés à un flotteur 29, relié lui-même à une ancre 30 au moyen d'un câble 31.

L'eau introduite dans la cuve y est alors traitée grâce aux mouvements de rotation de l'agitateur, qui dissolvent et dispersent les réactifs introduits par l'ouverture 29 ou enfermés dans le panier grillagé. Les précipités formés au cours du traitement sont après décantation évacués par la vanne inférieure 14, tandis que l'eau traitée ou le surnageant débarrassé du précipité est entraîné à travers la vanne latérale 15 par la pompe manuelle 17 vers le filtre primaire 18 et la cartouche 19, pour finalement être stocké dans les vaches à eau 21.

Revendications:

1. Installation manuelle de prélèvement et de traitement d'eaux naturelles, caractérisée en ce qu'elle comporte une cuve de traitement en matière souple, dans laquelle plonge un agitateur, ladite cuve étant munie à sa base d'une vanne d'évacuation du précipité et vers la mi-hauteur à partir du bas d'une vanne d'évacuation du surnageant traité, cette dernière étant reliée à un ou plusieurs réservoirs de stockage par l'intermédiaire d'une pompe manuelle et de filtres.

2. Installation suivant la revendication 1, caractérisée en ce que la cuve de traitement est suspendue de manière amovible dans une ossature, dont les éléments sont aisément assemblables et démontables et qui supporte les éléments créant l'agitation et leur mécanisme d'entraînement ainsi que les divers appareillages.

3. Installation suivant la revendication 2, caractérisée en ce que l'ossature comporte à sa partie supérieure des supports en porte-à-faux pour des réservoirs de stockage d'eau traitée, et à sa base des éléments assurant la stabilité de l'ensemble.

4. Installation suivant la revendication 2, caractérisée en ce que sur et au sommet de l'ossature est prévu un plateau horizontal surplombant la cuve de traitement, servant de support au mécanisme d'entraînement de l'agitateur, dont l'axe traverse le plateau, et pourvu d'un orifice pour l'alimentation en eau à traiter et en réactifs dans ladite cuve.

5. Installation suivant la revendication 2, caractérisée en ce que le plateau est réalisé en plusieurs parties et

en ce que la partie centrale, comportant les supports du mécanisme d'entraînement de l'agitateur et le trou de passage de l'axe, est montée sur l'ossature de manière blocable en position.

6. Installation suivant la revendication 1, caractérisée en ce que les éléments créant l'agitation, c'est-à-dire les éléments constitutifs de l'agitateur, sont disposés à l'intérieur d'une cage de manière telle que ces éléments ne puissent endommager la cuve de traitement en matière souple.

7. Installation suivant la revendication 6, caractérisée en ce que la cage est constituée par un ensemble de tiges, au minimum deux, dont une extrémité est fixée à l'axe de l'agitateur dans sa partie supérieure et l'autre sur une couronne perpendiculaire audit axe et centrée sur ce dernier.

8. Installation suivant la revendication 1, caractérisée en ce qu'un panier grillagé, un sac poreux ou à trame large, ou analogue est associé à l'axe de l'agitateur et renferme les réactifs à dissoudre ou à disperser dans l'eau à traiter.

9. Installation suivant la revendication 1, caractérisée en ce que l'alimentation de la cuve de traitement en eau à traiter est réalisée à partir d'une crépine reliée à un tuyau amenant l'eau de l'endroit de prise, tel qu'une rivière, à ladite cuve par l'intermédiaire d'une pompe manuelle.

FIG.1

FIG.2

FIG.3

0013445

Office européen
des brevets

RAPPORT DE RECHERCHE EUROPEENNE

Numero de la demande

EP 79 20 0746

| Categorie | Citation du document avec indication, en cas de besoin des parties pertinentes | Revendica-tion concernee |
|---|---|---|
| | BE - A - 386 603 (J. CASTEELS)  * En entier * | 1 |
| | -- | |
| A | FR - A - 2 279 672 (STE D'ETUDES ECON. ETC.) | |
| A | DE - A - 2 136 646 (PRO. AQUA) | |
| A | US - A - 3 715 035 (G.H. TEEPLE, JR. et al.) | |
| | ---- | |

## DOCUMENTS CONSIDERES COMME PERTINENTS

### CLASSEMENT DE LA DEMANDE (Int Cl )

C 02 F  9/00
B 01 D 21/00

### DOMAINES TECHNIQUES RECHERCHES (Int. Cl.

C 02 F  9/00
B 01 D 21/00
C 02 F  1/18

### CATEGORIE DES DOCUMENTS CITES

X: particulierement pertinent
A: arrière-plan technologique
C: divulgation non-ecrite
P: document intercalaire
T: theorie ou principe a la base de l'invention
E: demande faisant interference
D: document cite dans la demande
L: document cite pour d autres raisons
&: membre de la meme famille document correspondant

Le present rapport de recherche a ete etabli pour toutes les revendications

| Lieu de la recherche | Date d achevement de la recherche | Examinateur |
|---|---|---|
| La Haye | 27-03-1980 | AKOLEYEN |

OEB Form 1503 1  06.78